# EUROPEAN PATENT APPLICATION

(11) **EP 3 712 825 A1**
(43) Date of publication of application: **23.09.2020**
(21) Application number: 19894391.2
(22) Date of filing: 06.03.2019
(51) Int. Cl.: G06N 20/00

(54) **MODEL PREDICTION METHOD AND DEVICE**

(30) Priority: 31.01.2019 CN 201910096138
(71) Applicant: Wangsu Science & Technology Co., Ltd., Shanghai 200030 (CN)
(72) Inventor: GUO, Shengtin, Shanghai 200030 (CN)
(74) Representative: Vinsome, Rex Martin
(86) International application number: PCT/CN2019/077237
(87) International publication number: WO 2020/155300

(57) **Abstract**

A model prediction method and a device thereof are provided. The method comprises: obtaining a plurality of target models, performing prediction on data to be predicted by using the plurality of target models and obtaining prediction results corresponding to the plurality of target models respectively, and determining a prediction result of the data to be predicted. In the embodiments, the method of determining the data to be predicted based on the prediction results corresponding to a plurality of target models may avoid a technical problem of a poor prediction effect caused by a model structure problem of one target model, thereby improving prediction effect of a model. Further, a model with a higher accuracy is selected to perform a subsequent training process by analyzing prediction accuracies of a first model and a first-level sub-model obtained based on the first model for training data respectively, so that the target model obtained by training is more accurate.

## Description

### TECHNICAL FIELD

The present disclosure relates to the field of data processing technology, and in particular to a method and a device of model prediction.

### BACKGROUND

In the field of data processing technology, machine learning is a hotspot in research. Generally, a target model may be obtained by machine learning based on training data, and data to be predicted may be predicted by using the target model, thereby obtaining a prediction result of the data to be predicted. A deep learning system is a common machine learning method. Specifically, a user may construct a deep learning system by artificially designing a deep learning network model, and a target model with a good prediction effect may be obtained by training a set of training data by using the constructed deep learning network model. However, the process of artificially designing the deep learning network model is very complicated. If it is desired to train a target model with a good prediction effect, a user may be required to learn knowledge of different aspects, which results in the wastes of human labour and time.

The inventor finds that at least following problems exist in the existing technology. To solve the above problems, a deep learning network model is generally trained by an automated machine learning method. Specifically, the automated machine learning method usually relies on an existing preset training algorithm, and a plurality of random models with different model structures may be obtained based on the preset training algorithm, and then an optimal model may be selected from a plurality of random models based on a preset selecting rule, and then a target model may be obtained by training the optimal model based on training data input by the user. By the above method, the user may obtain a target model without need to artificially design a deep learning network model. However, in practice, a preset training algorithm may be only applicable to a given application scenario, and cannot satisfy the requirements of a plurality of users. In a possible circumstance, if training data is less, a target model obtained by training in the above manner usually has a poor prediction effect.

In conclusion, a model prediction method is urgently needed now to improve prediction effect of a model.

### SUMMARY

Embodiments of the present disclosure provide a method and a device of model prediction to improve prediction effect of a model.

An embodiment of the present disclosure provides a model prediction method which includes:
obtaining data to be predicted;
performing prediction on the data to be predicted by using a plurality of target models, and obtaining prediction results corresponding to the plurality of target models respectively, where a first target model is obtained according to a prediction accuracy of a first model for training data and a prediction accuracy of a first-level sub-model obtained based on the first model for the training data, the first model is an initial model or an N-th-level sub-model obtained based on the initial model, N is an integer greater than or equal to 1, and the first target model is any one target model in the plurality of target models; and
determining a prediction result of the data to be predicted according to the prediction results corresponding to the plurality of target models respectively.

In addition, obtaining the first target model according to the prediction accuracy of the first model for the training data and the prediction accuracy of the first-level sub-model obtained based on the first model for the training data includes:
obtaining the first target model according to the first-level sub-model when the prediction accuracy of the first-level sub-model obtained based on the first model for the training data is less than a preset threshold and the prediction accuracy of the first model for the training data is less than the prediction accuracy of the first-level sub-model for the training data.

In addition, the method further includes: determining the first model as the target model when the prediction accuracy of the first model for the training data is greater than the preset threshold.

In addition, the method further includes: obtaining the first target model according to the first model when the prediction accuracy of the first model for the training data is greater than the prediction accuracy of the first-level sub-model for the training data.

In addition, determining the prediction result of the data to be predicted according to the prediction results corresponding to the plurality of target models respectively includes:
determining the prediction result of the data to be predicted as the first prediction result if the number of the targe models with the prediction results as first prediction results is greater than the number of the target models with the prediction results as second prediction results, where the second prediction result is a prediction result other than the first prediction result in the prediction results corresponding to the plurality of target models respectively.

An embodiment of the present disclosure provides a model prediction device which includes:
an obtaining module, configured to obtain data to be predicted;
a predicting module, configured to perform prediction on the data to be predicted by using a plurality of target models and to obtain prediction results corresponding to the plurality of target models respectively, where a first target model is obtained according to a prediction accuracy of a first model for training data and a prediction accuracy of a first-level sub-model obtained based on the first model for the training data, the first model is an initial model or an N-th-level sub-model obtained based on the initial model, N is an integer greater than or equal to 1, and the first target model is any one target model in the plurality of target models; and
a determining module, configured to determine a prediction result of the data to be predicted according to the prediction results corresponding to the plurality of target models respectively.

In addition, the device further includes a training module which is specifically configured to: obtain the first target model according to the first-level sub-model when the prediction accuracy of the first-level sub-model obtained based on the first model for the training data is less than a preset threshold and the prediction accuracy of the first model for the training data is less than the prediction accuracy of the first-level sub-model for the training data.

In addition, the training module is further configured to: determine the first model as the target model when the prediction accuracy of the first model for the training data is greater than the preset threshold.

In addition, the training module is further configured to: obtain the first target model according to the first model when the prediction accuracy of the first model for the training data is greater than the prediction accuracy of the first-level sub-model for the training data.

In addition, the determining module is configured to: determine the prediction result of the data to be predicted as the first prediction result when the number of the target models with prediction results as first prediction result is greater than the number of the target models with prediction results as second prediction result, where the second prediction result is a prediction result other than the first prediction result in the prediction results corresponding to the plurality of target models respectively.

In some embodiments of the present disclosure, a plurality of target models are obtained and data to be predicted is predicted by using the plurality of target models to obtain prediction results corresponding to the plurality of target models respectively, and then the prediction result of the data to be predicted is determined according to the prediction results corresponding to the plurality of target models respectively. Any one target model in a plurality of target models may be obtained according to the prediction accuracy of the first model for the training data and the prediction accuracy of the first-level sub-model obtained based on the first model for the training data, where the first model may be an initial model or an N-th-level sub-model obtained based on the initial model. Compared with an existing method of determining a prediction result of data to be predicted by adopting a prediction result corresponding to one target model, the method of determining the prediction result of the data to be predicted based on the prediction results corresponding to a plurality of target models respectively in the embodiments of the present disclosure may avoid a technical problem of a poor prediction effect caused by a model structure problem of one target model, thereby improving prediction effect of a model. Further, a model with a higher accuracy may be selected to perform a subsequent training process by analysing the prediction accuracies of the first model and the first-level sub-model obtained based on the first model for the training data respectively, so that the target model obtained by training is more accurate, that is, the model prediction method in the embodiment of the present disclosure may be applied to a plurality of application scenarios with good user experience.

### BRIEF DESCRIPTION OF DRAWINGS

One or more embodiments will be illustrated with pictures in corresponding accompanying drawings, and these illustrative descriptions do not constitute limitations to the embodiments.
FIG. 1 is a flowchart illustrating a model prediction method according to an embodiment of the present disclosure.
FIG. 2 is a flowchart illustrating a method for obtaining a first target model according to an embodiment of the present disclosure.
FIG. 3 is a schematic diagram illustrating structures of four first-level sub-models obtained based on an initial model according to an embodiment of the present disclosure.
FIG. 4 is a flowchart illustrating a model prediction method according to an embodiment of the present disclosure.
FIG. 5 is a schematic diagram illustrating a structure of a model prediction device according to an embodiment of the present disclosure.

### DETAILED DESCRIPTION

To make objective, technical solutions and advantages of the present disclosure more clearly, some embodiments of the present disclosure will be further described in detail below in combination with drawings and examples. It is to be understood that the specific embodiments described herein are only used to explain the present disclosure rather than limit the present disclosure.

In some embodiments of the present disclosure, a implementation process of a model prediction method may specifically include a model training process (a training stage) and a process of predicting data to be predicted by using a plurality of target models obtained by training (a prediction stage), or may also include other processes, which is not specifically limited herein.

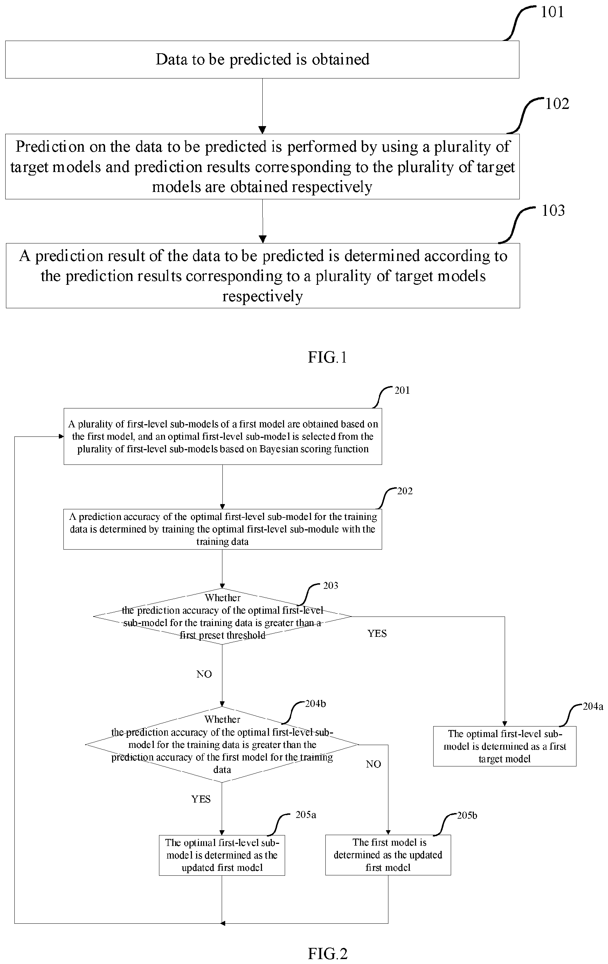

FIG. 1 is a flowchart illustrating a model prediction method according to an embodiment of the present disclosure. The method includes the following steps.

At step 101, data to be predicted is obtained.

In an example of the present disclosure, the data to be predicted may include one type of data, or may include a plurality of types of data. If the data to be predicted includes one type of data, the data to be predicted may be image data (a video and/or a picture), or may be text data (such as user data, log data, a sales record and the like), or may be audio data. If the data to be predicted includes a plurality of types of data, the data to be predicted may be any combination of the image data, the text data, and the audio data, which is not specifically limited herein.

For example, in a possible application scenario, the data to be predicted may be user data provided by an Internet marketer, and the user data may include characteristic information such as gender, blood type, height, and weight of a user. By using the model prediction method in the embodiment of the present disclosure, whether the data to be predicted is a user who is interested in products marketed by the marketer may be determined after performing a prediction on the data to be predicted. In another possible application scenario, the data to be predicted may be log data on a network platform. By using the model prediction method in the embodiment of the present disclosure, whether the data to be predicted is a log with sensitive information may be determined after performing a prediction on the data to be predicted.

At step 102, prediction on the data to be predicted is performed by using a plurality of target models and prediction results corresponding to the plurality of target models are obtained respectively.

In an example of the present disclosure, after obtaining the data to be predicted, prediction information corresponding to a plurality of target models respectively may be obtained by performing prediction on the data to be predicted with a plurality of target models respectively, and then, the prediction results corresponding to the plurality of target models respectively are determined according to the prediction information corresponding to the plurality of target models respectively. In a possible implementation (referred to as an implementation 1 for convenience of description), the prediction information corresponding to the target model may be a prediction score. By taking a binary classification model as the target model as an example, the prediction result may include a first label (e.g., a white sample) and a second label (e.g., a black sample). If the prediction score obtained by using the target model to perform prediction on the data to be predicted is greater than or equal to a second preset threshold, the prediction result corresponding to the target model may be determined as the first label. Accordingly, if the prediction score obtained by using the target model to perform prediction on the data to be predicted is less than the second preset threshold, the prediction result corresponding to the target model may be determined as the second label.

In another possible implementation (referred to as an implementation 1 for convenience of description), the prediction information corresponding to the target model may be predictive hyperplane distribution information corresponding to the data to be predicted. Specifically, a predictive hyperplane may be preset. For each target model, the data to be predicted may be mapped to one side of the predictive hyperplane by using the target model, and then the prediction result corresponding to the target model is determined according to a position where the data to be predicted is located. For example, if the target model maps the data to be predicted to one side of the predictive hyperplane, the prediction result corresponding to the target model may be determined as the first label; if the target model maps the data to be predicted to the other side of the predictive hyperplane, the prediction result corresponding to the target model may be determined as the second label.

It is to be noted that the implementation 1 and the implementation 2 merely illustrate exemplary manners in which the prediction result corresponding to the target model is obtained. In other possible implementations, the prediction result corresponding to the target model may also be determined in another manner, which is not specifically limited herein.

At step 103, a prediction result of the data to be predicted is determined according to the prediction results corresponding to a plurality of target models respectively.

In a specific implementation, types and numbers of a plurality of prediction results may be counted after the prediction results corresponding to a plurality of target models are determined. If the number of the target models with prediction results as the first prediction result is greater than the number of the target models with prediction results as the second prediction result, the prediction result of the data to be predicted may be determined as the first prediction result, where the second prediction result may be any one prediction result other than the first prediction result in the prediction results corresponding to a plurality of target models respectively. For example, Table 1 illustrates prediction results corresponding to a plurality of models respectively.

**Table 1 Illustration of prediction results corresponding to a plurality of models respectively**

| Model | Prediction result |
|---|---|
| First target model | First label |
| Second target model | Second label |
| Third target model | Second label |
| Fourth target model | First label |
| Fifth target model | Second label |

As shown in Table 1, since the prediction results corresponding to the second target model, the third target model and the fifth target model are all second label and the prediction results corresponding to the first target model and the fourth target model are both first label, it may be determined that the prediction result includes the first label and the second label. Since the number of the target models with the prediction results as the first label is two and the number of the target models with the prediction results as the second label is three, it may be determined that the second label is the first prediction result, the first label is the second prediction result, and the prediction result corresponding to the data to be predicted is the second label.

Compared with an existing method of determining a prediction result of data to be predicted based on a prediction result corresponding to one target model, the method of determining the prediction result of the data to be predicted based on the prediction results corresponding to a plurality of target models respectively in the above embodiment of the present disclosure may avoid a technical problem of a poor prediction effect caused by a model structure problem of one target model, thereby improving prediction effect of a model. That is, the model prediction method in the embodiment of the present disclosure may be applied to a plurality of application scenarios with good user experience.

In an embodiment of the present disclosure, a plurality of target models may be obtained in an existing training manner, or may be obtained through training by persons skilled in the art according to an actual situation, which is not specifically limited herein. For example, the first target model may be obtained according to the prediction accuracy of the first model for the training data and the prediction accuracy of the first-level sub-model obtained based on the first model for the training data, and the first model may be an initial model or an N-th-level sub-model obtained based on the initial model. The first target model may be any one target model in a plurality of target models.

A process of obtaining a first target model according to a first model will be specifically described below, and a process of generating a target model other than the first target model can be realized by referring to the process of generating the first target model. It is to be noted that any one target model in a plurality of target models may be generated based on the same first model, that is, if N target models exist, each target model in the N target models may be generated based on the same first model.

FIG. 2 is a flowchart illustrating a method of obtaining a first target model according to an embodiment of the present disclosure. The method includes the following steps.

At step 201, a plurality of first-level sub-models of a first model are obtained based on the first model, and an optimal first-level sub-model is selected from the plurality of first-level sub-models based on Bayesian scoring function.

Here, the first model may be an initial model or an N-th-level sub-model obtained based on the initial model. By taking the first model as an initial model as an example, the initial model may be a random model obtained based on an automated machine learning method. For example, a user may obtain a random model by triggering random generation instructions of the automated machine learning system and controlling a structure of a random combination model in the automated machine learning system. The model structure may include a number and an arrangement order of a plurality of types of network layers, a number and values of the convolution kernels and so on, which are set in a model. The plurality of types of network layers may include a convolution layer, a pooling layer, an activation layer, and the like, or may also include other network layers, which is not specifically limited herein.

In a specific implementation, a plurality of first-level sub-models of an initial model may be obtained according to the initial model in many manners. In a possible implementation, a plurality of first-level sub-models of the initial model may be randomly generated based on a structure of the initial model. For example, a plurality of first-level sub-models of the initial model may be obtained by adding at least one network layer on the basis of the initial model, or may be obtained by adjusting the arrangement order of the added at least one network layer on the basis of the initial model, or may be obtained by adjusting the number of convolution kernels of the added at least one network layer on the basis of the initial model, or may be obtained by adjusting the values of the convolution kernels of the added at least one network layer on the basis of the initial model, or may be obtained by adopting any combination of the above, which is not specifically limited herein.

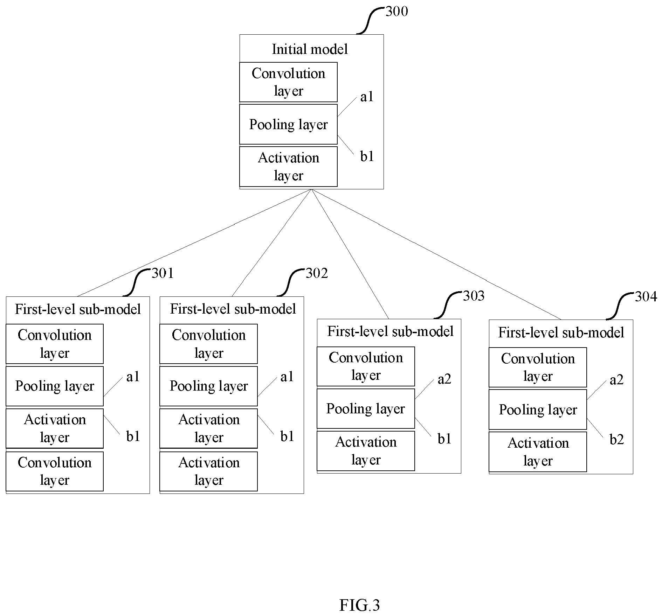

For example, FIG. 3 is a schematic diagram illustrating structures of four first-level sub-models obtained based on an initial model according to an embodiment of the present disclosure. As shown in FIG. 3, an initial model 300 includes one convolution layer, one pooling layer and one activation layer which are sequentially arranged. The number of convolution kernels of the initial model 300 is a1, and the size of the convolution kernel is b1. As shown in FIG. 3, the number and the size of convolution kernels of a first-level sub-model 301 and a first-level sub-model 303 are same as those of the initial model 300, the first-level sub-model 301 includes two convolution layers, one activation layer and one pooling layer, and the first-level sub-model 303 includes one convolution layer, two activation layers and one pooling layer which are sequentially arranged. Thus, the first-level sub-model 301 and the first-level sub-model 303 may be obtained by adding a network layer on the basis of the initial model 300. Correspondingly, a first-level sub-model 302 and a first-level sub-model 304 both include one convolution layer, one activation layer and one pooling layer, and the number of convolution kernels of the first-level sub-model 302 is a2. Thus, the first-level sub-model 302 may be obtained by adjusting the number of convolution kernels of the added at least one network layer on the basis of the initial model 300. The size of the convolution kernel of the first-level sub-model 304 is b2 and the first-level sub-model 304 may be obtained by adjusting the value of the convolution kernel of the added at least one network layer on the basis of the initial model 300.

It is to be noted that a plurality of network layers included in a model may be connected in many possible sequences. For example, the plurality of network layers may be sequentially connected as shown in FIG. 3, or randomly connected, which is not specifically limited herein. As shown in FIG. 3, the first-level sub-model 301 may include four network layers, where the first layer and the fourth layer are both convolution layers, the second layer is the pooling layer, and the third layer is the activation layer. In an example, the first-level sub-model 301 may be formed by sequentially connecting a convolution layer, a pooling layer, an activation layer and a convolution layer. In another example, the first-level sub-model 301 may also be formed by connecting a convolution layer, an activation layer, a pooling layer, a convolution layer and an activation layer.

In an embodiment of the present disclosure, scores of the first-level sub-models 301-304 may be obtained by scoring the first-level sub-models 301-304 respectively based on a preset scoring rule after the four first-level sub-models of the initial model are obtained, and then the first-level sub-model with the highest score is selected as an optimal first-level sub-model. In a specific implementation, the preset scoring rule may be set by persons skilled in the art according to an actual situation, or may be determined by experiments, which is not specifically limited herein.

For example, the Bayesian scoring function may be adopted as the preset scoring rule. Specifically, the structure of the model may be scored based on the Bayesian scoring function. The better the structure of the model is, the higher the score of the model determined based on the Bayesian scoring function is; correspondingly, the worse the structure of the model is, the lower the score of the model determined based on the Bayesian scoring function is. In an example, the Bayesian scoring function may include a scoring parameter. In practical use, the scoring parameter of the Bayesian scoring function may be updated based on a prediction accuracy of a model after the model is scored based on the Bayesian scoring function, so that the Bayesian scoring function has a better scoring effect.

In a specific implementation, a plurality of first-level sub-models of the initial model may be scored based on the initial Bayesian scoring function. The scoring parameter in the initial Bayesian scoring function may be set by persons skilled in the art according to experiences, or may be set according to an actual situation, which is not specifically limited herein. Further, after the first-level sub-models 301-304 are scored respectively based on the initial Bayesian scoring function, if a sub-model with the highest score is determined as the first-level sub-model 302, the first-level sub-model 302 may be taken as the optimal first-level sub-model of the initial model.

The implementation process of obtaining the first-level sub-model of the initial model is specifically described at step 201. In an embodiment of the present disclosure, if the first model is the first-level sub-model of the initial model, the first model may be any one of the first-level sub-models 301-304 of the initial model. For example, the first model may be the optimal first-level sub-model 302 of the initial model. That is, if the first model is an N-th-level sub-model of the initial model, the first model may be the first-level sub-model of an N-1-th-level sub-model. For example, ifN=2, four first-level sub-models 311-314 of the optimal first-level sub-model 302 may be obtained by the method at step 201, where the four first-level sub-models 311-314 of the optimal first-level sub-model 302 are four second-level sub-models 311-314 of the initial model; correspondingly, the first model may be any one of the four second-level sub-models 311-314 of the initial model, or may be an optimal second-level sub-model 312 of the initial model. Further, the optimal first-level sub-model of the first model may be obtained by the method at step 201.

At step 202, a prediction accuracy of the optimal first-level sub-model is determined based on training data.

Herein, the training data may be provided by a user, or may be pre-obtained in many manners (for example, by Internet and a questionnaire survey and so on), which is not specifically limited herein. In an embodiment of the present disclosure, the training data may be pre-divided into first data and second data. The first data may be used to train a model, and the second data may be used to verify the model obtained by training and determine an effect of the model obtained by training. Specifically, the training data may be divided in many manners, for example, the training data may be divided into first data and second data according to a preset ratio. For example, the training data includes 1000 pieces of image data. If the preset ratio is 8:2, 800 pieces of image data in the 1000 pieces of image data may be taken as the first data, and 200 pieces of image data other than the 800 pieces of image data in the 1000 pieces of image data may be taken as the second data.

In a specific implementation, the first data may be input into a model training system after the optimal first-level sub-model is loaded in the model training system, so that the model training system performs model training for the optimal first-level sub-model with the first data to obtain the trained model. Further, the second data may be predicted by using the trained model, and the prediction accuracy of the optimal first-level sub-model may be determined by counting the number of the second data whose prediction result is matched with real result.

At step 203, the prediction accuracy of the optimal first-level sub-model for the training data is compared with a first preset threshold.

The first preset threshold may be set by persons skilled in the art according to experiences, or may be determined by experiments, which is not specifically limited herein. In a specific implementation, if the prediction accuracy of the optimal first-level sub-model for the training data is greater than or equal to the first preset threshold, step 204a may be performed; if the prediction accuracy of the optimal first-level sub-model for the training data is less than the first preset threshold, step 204b may be performed.

At step 204a, the optimal first-level sub-model is determined as a first target model.

If the prediction accuracy of the optimal first-level sub-model for the training data is greater than or equal to the first preset threshold, it may indicate that the optimal first-level sub-model has a good prediction effect. At this time, the optimal first-level sub-model may be taken as the first target model.

At step 204b, the prediction accuracy of the optimal first-level sub-model for the training data is compared with the prediction accuracy of the first model for the training data.

In an embodiment of the present disclosure, if the prediction accuracy of the optimal first-level sub-model for the training data is less than the first preset threshold, it may indicate that the prediction effect of the first-level sub-model cannot satisfy a preset requirement. At this time, the prediction accuracy of the first model for the training data may be compared with the prediction accuracy of the optimal first-level sub-model for the training data, and the first model may be updated according to a comparison result, and then the first target model is obtained according to the updated first model.

In a specific implementation, the first model and the optimal first-level sub-model may be trained by using the first data (e.g., 800 pieces of image data) respectively, and the second data (e.g., 200 pieces of image data) may be predicted by using the trained first model and the trained first-level sub-model, then the prediction accuracy of the first model for the second data and the prediction accuracy of the optimal first-level sub-model for the second data are determined. If the prediction accuracy of the optimal first-level sub-model for the second data is greater than the prediction accuracy of the first model for the second data, step 205a may be performed; if the prediction accuracy of the first model for the second data is greater than the prediction accuracy of the first-level sub-model for the second data, step 205b may be performed.

For example, after 200 pieces of image data are predicted by using the optimal first-level sub-model, it is determined that the prediction results of 150 pieces of image information are same as the real results and the prediction results of 50 pieces of image information are different from the real results; after 200 pieces of image data are predicted by using the first model, it is determined that the prediction results of 100 pieces of image information are same as the real results and the prediction results of 100 pieces of image information are different from the real results. Therefore, it may be determined that the prediction accuracy of the optimal first-level sub-model is greater than the prediction accuracy of the first model. At this time, step 205a may be performed.

In a possible implementation, after it is determined that the prediction accuracy of the optimal first-level sub-model for the training data is less than the first preset threshold, the scoring parameter of Bayesian scoring function may be updated according to the model structure of the optimal first-level sub-model and the prediction accuracy of the optimal first-level sub-model for the training data to obtain the updated Bayesian scoring function, and the updated Bayesian scoring function may be used in a subsequent model scoring process, which is not described herein.

At step 205a, the optimal first-level sub-model is determined as the updated first model, and step 201 is performed.

In an embodiment of the present disclosure, if the prediction accuracy of the optimal first-level sub-model for the second data is greater than the prediction accuracy of the first model for the second data, the optimal first-level sub-model may be taken as the updated first model, and steps 201-204 may be repeated by using the updated first model until the first target model with the prediction accuracy for the training data being greater than or equal to the first preset threshold is obtained. For example, if the optimal first-level sub-model 302 is determined as the updated first model, first-level sub-models 311-314 (i.e., a plurality of second-level sub-models of the initial model) of the optimal first-level sub-model 302 may be obtained according to step 201, and then the optimal first-level sub-model (e.g., a first-level sub-model 312) may be obtained by scoring the first-level sub-models 311-314 based on the updated Bayesian scoring function, and then, the first target model may be obtained according to the prediction accuracy of the first-level sub-model 312 for the training data and the prediction accuracy of the optimal first-level sub-model 302 for the training data.

At step 205b, the first model is determined as the updated first model, and step 201 is performed.

If the prediction accuracy of the first model for the second data is greater than the prediction accuracy of the optimal first-level sub-model for the second data, the first model may be taken as the updated first model, and steps 201-204 may be repeated by using the updated first model until the first target model with the prediction accuracy for the training data being greater than or equal to the first preset threshold is obtained. For example, if the first model is determined as the updated first model, the first-level sub-models 301-304 may be discarded, and step 201 is performed by re-using the first model to obtain first-level sub-models 305-308 (which are randomly determined and may be same as or different from the first-level sub-models 301-304, which is not limited herein) of the first model. Further, the optimal first-level sub-model (e.g., a first-level sub-model 307) may be obtained by scoring the first-level sub-models 305-308 based on the updated Bayesian scoring function, and the first target model may be obtained according to the prediction accuracy of the first-level sub-model 307 for the training data and the prediction accuracy of the first model for the training data.

It is to be noted that step 203 is only an example describing a condition of determining loop termination provided by the embodiments of the present disclosure. In a specific implementation, the condition of determining loop termination may be set by persons skilled in the art according to an actual situation, which is not specifically limited herein. In another example, a second preset threshold may be preset, and the number of times of loop execution may be recorded. If the number of times of loop execution is greater than or equal to the second preset threshold, it may be determined that the loop is terminated. At this time, the optimal first-level sub-model at the time of loop termination is determined as the first target model.

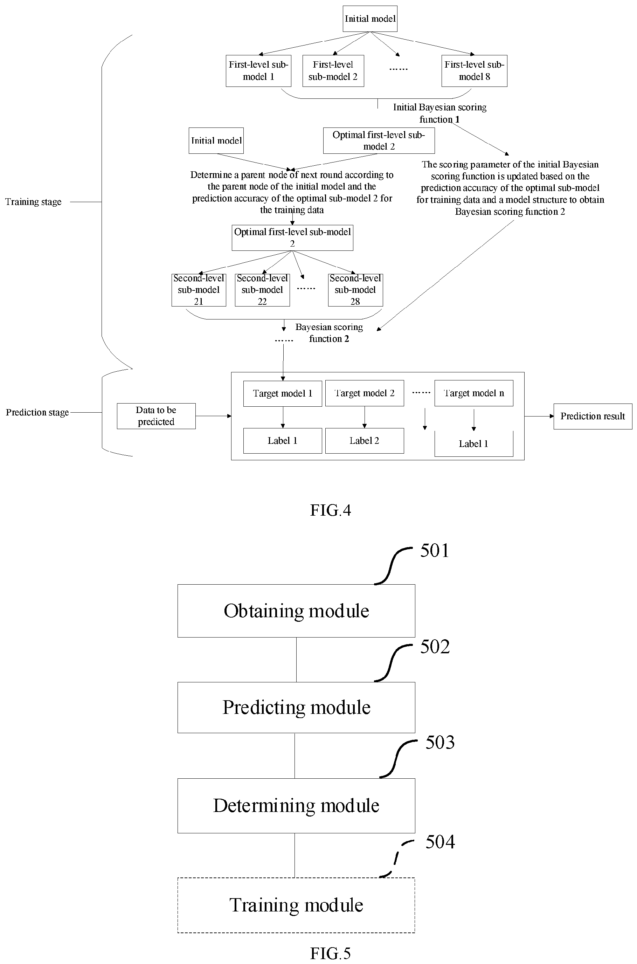

FIG. 4 is a schematic diagram illustrating a model prediction method according to an embodiment of the present disclosure. As shown in FIG. 4, the model prediction method may include a training stage and a prediction stage. A plurality of target models may be obtained at the training stage, and a training process of each target model may be implemented by referring to steps 201-204. Further, a prediction result of data to be predicted may be determined at the prediction stage, and a predicting process of the data to be predicted may be implemented by referring to steps 101-103.

An embodiment of the present disclosure also provides a model prediction device for the above method and flow, and specific contents of the device may be implemented by referring to the above method.

FIG. 5 is a schematic diagram illustrating a structure of a model prediction device according to an embodiment of the present disclosure. The device includes:
an obtaining module 501, configured to obtain data to be predicted;
a predicting module 502, configured to perform prediction on the data to be predicted by using a plurality of target models and to obtain prediction results corresponding to the plurality of target models respectively, where a first target model is obtained according to a prediction accuracy of a first model for training data and a prediction accuracy of a first-level sub-model obtained based on the first model for the training data, the first model is an initial model or an N-th-level sub-model obtained based on the initial model, N is an integer greater than or equal to 1, and the first target model is any one target model in the plurality of target models; and
a determining module 503, configured to determine a prediction result of the data to be predicted according to the prediction results corresponding to the plurality of target models respectively.

In addition, the device further includes a training module 504, which is specifically configured to:
obtain the first target model according to the first-level sub-model when the prediction accuracy of the first-level sub-model obtained based on the first model for the training data is less than a preset threshold, and the prediction accuracy of the first model for the training data is less than the prediction accuracy of the first-level sub-model for the training data.

In addition, the training module 504 is further configured to:
determine the first model as the target model when the prediction accuracy of the first model for the training data is greater than the preset threshold.

In addition, the training module 504 is further configured to:
obtain the first target model according to the first model if the prediction accuracy of the first model for the training data is greater than the prediction accuracy of the first-level sub-model for the training data.

In addition, the determining module 503 is configured to:
determine the prediction result of the data to be predicted as the first prediction result if the number of the target models with prediction results as first prediction result is greater than the number of the target models with prediction results as second prediction result. Here, the second prediction result is a prediction result other than the first prediction result in the prediction results corresponding to the plurality of target models respectively.

It may be seen from the above contents that, in the above embodiments of the present disclosure, a plurality of target models are obtained, and the data to be predicted is predicted by using the plurality of target models to obtain prediction results corresponding to the plurality of target models respectively, and then, the prediction result of the data to be predicted is determined according to the prediction results corresponding to the plurality of target models respectively. Here, any one target model in a plurality of target models is obtained according to the prediction accuracy of the first model for the training data and the prediction accuracy of the first-level sub-model obtained based on the first model for the training data, and the first model may be an initial model or an N-th-level sub-model obtained based on the initial model. Compared with an existing method of determining a prediction result of data to be predicted based on a prediction result corresponding to one target model, the method of determining the prediction result of the data to be predicted based on the prediction results corresponding to a plurality of target models respectively in the embodiments of the present disclosure may avoid a technical problem of a poor prediction effect caused by a model structure problem of one target model, thereby improving prediction effect of a model. Further, a model with a higher accuracy may be selected to perform a subsequent training process by analysing the prediction accuracies of the first model and the first-level sub-model obtained based on the first model for the training data respectively, so that the target model obtained by training is more accurate, that is, the model prediction method in the embodiment of the present disclosure may be applied to a plurality of application scenarios with good user experiences.

The persons skilled in the art should understand that the embodiments of the present disclosure may be provided as a method or a computer program product. Thus, entire hardware embodiments, entire software embodiments or embodiments combining software and hardware may be adopted in the present disclosure. Further, the present disclosure may be implemented in the form of a computer program product that is implemented on one or more computer available storage media (including but not limited to magnetic disk memory, CD-ROM, and optical memory and so on) including computer available program codes.

The present disclosure is described by referring to flowcharts and/or block diagrams of a method, a device (a system) and a computer program product in an embodiment of the present disclosure. It shall be understood that each flowchart and/or block in the flowcharts and/or the block diagrams or a combination of a flow chart and/or a block of the flowcharts and/or the block diagrams may be implemented by computer program instructions. These computer program instructions may be provided to a general-purpose computer, a dedicated computer, an embedded processor, or a processor of other programmable data processing device to generate a machine so that the instructions, which are executed by a computer or a processor of other programmable data processing device, generate an apparatus for implementing functions designated in one or more flows of the flowcharts and/or one or more blocks of the block diagrams.

Further, these computer program instructions may also be stored in a computer readable memory that can direct a computer or other programmable data processing device to work in a particular manner so that the instructions stored in the computer readable memory generate a product including an instruction device and the instruction device can implement functions designated in one or more flows of the flowcharts and/or one or more blocks of the block diagrams.

These computer program instructions may also be loaded on a computer or other programmable data processing device, so that a series of operation steps can be executed on the computer or other programmable device to generate processing achieved by the computer, and thus instructions, which are executed on the computer or other programmable data processing device, are provided for steps for realizing functions designated in one or more flows of the flowcharts and/or one or more blocks of the block diagrams.

Although a plurality of embodiments of the present disclosure are described, persons skilled in the art may make additional changes and modifications to these embodiments once they learn basic creative concepts. Therefore, the appended claims are intended to be interpreted as including a plurality of embodiments and all changes and modifications falling into the scope of the present disclosure.

It is apparent that the persons skilled in the art may make different modifications and variations to the present disclosure without departing from the spirit and scope of the present disclosure. Thus, if these modifications and variations of the present disclosure belong to the scope of claims and equivalents thereof, the present disclosure is also intended to include these modifications and variations.

## Claims

1. A model prediction method, comprising:
obtaining data to be predicted;
performing prediction on the data to be predicted by using a plurality of target models and obtaining prediction results corresponding to the plurality of target models respectively; wherein a first target model is obtained according to a prediction accuracy of a first model for training data and a prediction accuracy of a first-level sub-model obtained based on the first model for the training data, the first model is an initial model or an N-th-level sub-model obtained based on the initial model, N is an integer greater than or equal to 1, and the first target model is any one target model in the plurality of target models; and
determining a prediction result of the data to be predicted according to the prediction results corresponding to the plurality of target models respectively.

2. The method according to claim 1, wherein obtaining the first target model according to the prediction accuracy of the first model for the training data and the prediction accuracy of the first-level sub-model obtained based on the first model for the training data comprises:
obtaining the first target model according to the first-level sub-model when the prediction accuracy of the first-level sub-model obtained based on the first model for the training data is less than a preset threshold and the prediction accuracy of the first model for the training data is less than the prediction accuracy of the first-level sub-model for the training data.

3. The method according to claim 2, wherein the method further comprises:
determining the first model as the target model when the prediction accuracy of the first model for the training data is greater than the preset threshold.

4. The method according to claim 2, wherein the method further comprises:
obtaining the first target model according to the first model when the prediction accuracy of the first model for the training data is greater than the prediction accuracy of the first-level sub-model for the training data.

5. The method according to any of claims 1 to 4, wherein determining the prediction result of the data to be predicted according to the prediction results corresponding to the plurality of target models respectively comprises:
determining the prediction result of the data to be predicted as the first prediction result when the number of the target models with prediction results as first prediction results is greater than the number of the target models with prediction results as second prediction results; wherein the second prediction result is a prediction result other than the first prediction result in the prediction results corresponding to the plurality of target models respectively.

6. A model prediction device, comprising:
an obtaining module, configured to obtain data to be predicted;
a predicting module, configured to perform prediction on the data to be predicted by using a plurality of target models and to obtain prediction results corresponding to the plurality of target models respectively; wherein a first target model is obtained according to a prediction accuracy of a first model for training data and a prediction accuracy of a first-level sub-model obtained based on the first model for the training data, the first model is an initial model or an N-th-level sub-model obtained based on the initial model, N is an integer greater than or equal to 1, and the first target model is any one target model in the plurality of target models; and
a determining module, configured to determine a prediction result of the data to be predicted according to the prediction results corresponding to the plurality of target models respectively.

7. The device according to claim 6, wherein the device further comprises a training module, configured to:
obtain the first target model according to the first-level sub-model when the prediction accuracy of the first-level sub-model obtained based on the first model for the training data is less than a preset threshold and the prediction accuracy of the first model for the training data is less than the prediction accuracy of the first-level sub-model for the training data.

8. The device according to claim 7, wherein the training module is further configured to:
determine the first model as the target model when the prediction accuracy of the first model for the training data is greater than the preset threshold.

9. The device according to claim 7, wherein the training module is further configured to:
obtain the first target model according to the first model when the prediction accuracy of the first model for the training data is greater than the prediction accuracy of the first-level sub-model for the training data.

10. The device according to any of claims 6 to 9, wherein the determining module is configured to:
determine the prediction result of the data to be predicted as the first prediction result when the number of the target models with prediction results as first prediction result is greater than the number of the target models with prediction results as second prediction result; wherein the second prediction result is a prediction result other than the first prediction result in the prediction results corresponding to the plurality of target models respectively.
